# EUROPÄISCHE PATENTSCHRIFT

(11) **EP 2 181 442 B1**
(45) Veröffentlichungstag und Bekanntmachung des Hinweises auf die Patenterteilung: **06.04.2011**
(21) Anmeldenummer: 08785619.1
(22) Anmeldetag: 19.08.2008
(51) Int. Cl.: G09F 3/10, B32B 27/12, D06N 3/06, D06N 3/04, D06N 3/18, D06N 3/00, C09J 7/04, C09J 123/08

(54) **SELBSTKLEBENDES PRINTMEDIUM**
SELF-ADHESIVE PRINT MEDIUM
SUPPORT D'IMPRESSION AUTOCOLLANT

(30) Priorität: 20.08.2007 DE 102007039263
(43) Veröffentlichungstag der Anmeldung: 05.05.2010
(73) Patentinhaber: Sattler AG, 8041 Graz (AT); LANXESS Deutschland GmbH, 51369 Leverkusen (DE)
(72) Erfinder: PICHLER, Michael, A-8045 Graz (AT); KREMERS, Arndt, 52146 Würselen (DE); HERRMANN, Michael, 50829 Köln (DE)
(74) Vertreter: Luderschmidt, Schüler & Partner
(86) Internationale Anmeldenummer: PCT/EP2008/006805
(87) Internationale Veröffentlichungsnummer: WO 2009/024322

(56) Entgegenhaltungen:
- EP-A- 1 227 180
- EP-A- 1 593 775
- DE-U1- 9 105 793
- DE-U1- 20 109 382
- DE-U1- 20 221 400
- FR-A- 2 843 134
- "Levamelt®EVM" 2005, LANXESS , XP002508731 Broschüre der Lanxess Deutschland GmbH, Bestellnr.: LXS-KA 018e, Ausgabe: 2005-9 das ganze Dokument

## Beschreibung

Die Erfindung betrifft ein selbstklebendes bedrucktes oder bedruckbares flächiges Medium, das auf flächige Unterlagen wie Fenster, Wände, Mauern, Schilder, spanische Wände und sonstige flächige Unterlagen aufgeklebt werden kann und das bedruckbar ist oder bereits entsprechende Drucke wie Informationen, Dekorationen, Werbungen usw. aufweist.

Derartige selbstklebende flächige Medien sind bereits seit langem bekannt. Sie bestehen im Allgemeinen aus einem textilen Träger oder Kern, der imprägniert ist und verschiedene Beschichtungen aufweist, insbesondere auf einer Seite eine Klebeschicht und auf der gegenüberliegenden Seite eine Schicht, die bedruckbar ist oder bereits mit einem entsprechenden Druck versehen ist, z. B. mit Dekorationen, Werbesprüchen, Informationen, besonderen Hinweisen usw.

Sehr viele dieser flächigen Medien eignen sich nur für einen einmaligen Gebrauch, d. h. sie werden für einen bestimmten Zweck mit einer Aufschrift, einem Werbespruch, mit einer Dekoration usw. versehen und auf eine Fläche aufgeklebt und nach einer bestimmten Zeit von dieser Fläche wieder entfernt.

Beim Entfernen wird sehr häufig die Klebeschicht beschädigt. Es bleiben Reste der Klebeschicht an der Unterlage kleben, so dass das Medium nicht noch einmal verwendet werden kann und entsorgt werden muss.

Man hat sich auch bemüht, entsprechende Darstellungsträger zu entwickeln, die mehrfach benutzt werden können. So wird z. B. in dem deutschen Gebrauchsmuster DE 202 21 400 U1 ein Darstellungsträger mit einem beschichteten Textil beschrieben, der eine Textilschicht und zwei Imprägnierschichten umfasst, von denen sich jede auf einer Seite der Textilschicht befindet, eine bedruckbare Lackschicht, die auf einer der Imprägnierschichten aufgebracht ist, eine druckempfindliche und wiederholt anbringbare Klebemittelschicht, die auf der Imprägnierschicht aufgebracht ist, die derjenigen gegenüberliegt, welche die Lackschicht aufnimmt, eine Schutzschicht, die auf der Klebemittelschicht angeordnet ist und aus einem Blatt gebildet ist, das gegenüber der druckempfindlichen Klebemittelschicht eine sehr geringe Klebekraft besitzt.

Nachteilig dabei ist, dass die Imprägnierschicht aus Polyvinylchlorid hergestellt wird, das einen Weichmacher enthält, der von der druckempfindlichen Klebemittelschicht aufgehalten werden muss, d. h. die Klebemittelschicht darf keine oder nur eine sehr geringe Durchlässigkeit gegenüber Weichmachern aufweisen.

Wenn es auch das Ziel der in der Gebrauchsmusterschrift beschriebenen Entwicklung war ein Produkt herzustellen, das öfters benutzt werden kann, kommt es doch häufig vor, dass beim Ablösen des Mediums von der Unterlage Teile von der Unterlage wie Schmutzreste usw. an der Klebeschicht hängen bleiben und dass dadurch die Klebekraft der Klebeschicht nach jedem Gebrauch abnimmt. Ein Wiederherstellen der ursprünglichen Klebekraft ist praktisch unmöglich.

Obwohl bereits eine ganze Reihe von selbstklebenden Printmedien bzw. Darstellungsträger bekannt sind, besteht noch ein Bedürfnis nach entsprechenden verbesserten selbstklebenden Artikeln.

Aufgabe der Erfindung ist es deshalb, ein selbstklebendes textiles Print- und Dekorationsmedium zur Verfügung zu stellen, das einfach herzustellen ist, das mehrfach benutzt werden kann und das insbesondere einfach gereinigt werden kann, wenn beim Ablösen von der Unterlage Reste in der Klebeschicht zurück geblieben sind, und auf diese Weise wieder praktisch seine ursprüngliche Klebekraft erhält.

Aufgabe der Erfindung ist es ferner, ein entsprechendes Medium zur Verfügung zu stellen, das gut bedruckbar ist, insbesondere digital bedruckbar ist, bzw. entsprechende Drucke bereits aufweist und das eine gute Beständigkeit gegenüber Witterungseinflüssen und Insektenbefall besitzt.

Diese Aufgabe wird gelöst durch ein selbstklebendes Printmedium, das umfasst ein mit einem Hydrophobierungsmittel und einem Fungizid imprägniertes textiles Flächengebilde (1), das eine einseitig aufgebrachte transparente bzw. pigmentierte Beschichtung (2) aufweist, auf der eine bedruckbare Lackschicht (3) aufgebracht ist, und das auf der anderen Seite, welche gegenüber der transparenten bzw. pigmentierte Beschichtung (2) liegt, eine Klebeschicht (4) aufweist, welche aus einer Mischung von mindestens zwei thermoplastischen bzw. polymeren Kunststoffen besteht.

Der polymere Kunststoff ist vorzugsweise ein Kautschuk bzw. ein Elastomer.

Das textile Flächengebilde ist vorzugsweise ein Gewebe, das vorteilhaft in Leinwandbindung hergestellt wird, wobei vorzugsweise synthetische Garne und zwar sowohl Fasergarne als auch Filamentgarne eingesetzt werden können, insbesondere solche aus Polyester wie Polyethylenterephthalat oder aus Polyamiden. Auch Garne aus vollaromatischen Polyamiden können eingesetzt werden. Die Verwendung von anorganischen Fasern wie Glasfasern ist ebenfalls möglich.

Es können feintitrige Garne, aber auch gröbere Garne verwendet werden. Es ist vorteilhaft, möglichst dichte Gewebe oder sonstige textile Flächengebilde einzusetzen.

Besonders vorteilhaft sind sogenannte technische Gewebe, die dem Printmedium eine besondere Festigkeit verleihen.

Die Lackschicht (3) kann vor oder nach Aufbringen der Klebeschicht aufgebracht werden. Gleichzeitiges Aufbringen ist auch möglich.

Das Medium kann bedruckt werden, insbesondere digital bedruckt werden und mit Dekorationen, Inschriften, Werbesprüchen usw. versehen werden.

Die Lackschicht kann bedruckt werden, nachdem auch die Klebeschicht aufgebracht worden ist, das Drucken kann aber auch bereits vorgenommen werden, wenn die Klebeschicht noch nicht aufgebracht ist.

Das Printmedium wird im Allgemeinen auf der Seite, auf der sich die Klebe- bzw. Haftschicht befindet, mit einer Schutzfolie insbesondere einem einseitig silikonisierten Schutzpapier (5) versehen; so wird die Klebeschicht geschützt und vor Verschmutzung und sonstigen Beschädigungen bewahrt. Das Printmedium kann so gelagert werden. Auch ist es möglich, das Printmedium aufzurollen und in Rollenform zu bewahren und zu transportieren.

Die Printmedien gemäß der Erfindung zeichnen sich insbesondere dadurch aus, dass sie vielfach wieder benutzt werden können und insbesondere, wenn z. B. nach Gebrauch und Ablösen von der Unterlage auf der Klebeschicht noch Verunreinigungen oder Reste von der Unterlage vorhanden sind, diese durch einfaches Waschen mit Wasser, eventuell unter zur Hilfenahme von milden Reinigungsmitteln wie Geschirrspülmitteln, gereinigt werden können. Danach besitzt das Printmedium wieder seine weitgehend volle Klebekraft und kann somit praktisch beliebig oft wieder eingesetzt werden.

Das Printmedium eignet sich sowohl für Zwecke, wo das Printmedium für längere Zeit auf einer Unterlage verbleiben soll, so z. B. zur Dekorationszwecken. Es ist aber auch für häufig wechselnde kürzere Gebrauchszeiten geeignet. So kann es z. B. zum Überkleben von Verkehrsschildern eingesetzt werden, wenn z. B. kurzfristig Umleitungen notwendig sind, wo sonst die entsprechenden Schilder z. B. entfernt oder überdeckt werden müssen und durch andere Hinweisschilder ausgetauscht werden müssen.

Die Printmedien gemäß der Erfindung sind sowohl im In- als auch im Out-doorbereich einsetzbar und können so für Werbezwecke, Dekoration, Beschattung, Sichtschutz und zum Anbringen von Informationen auf im Wesentlichen allen glatten oder weitgehend ebenen Oberflächen aufgebracht werden.

Die Printmedien lassen sich aber auch auf Unterlagen aufbringen, welche Unebenheiten oder Vertiefungen wie z. B. Löcher usw. aufweisen.

Das Mischungsverhältnis der thermoplastischen Kunststoffe bzw. polymeren Kunststoffe beträgt vorzugsweise 25 : 75 bis 75 : 25.

Die Mischung für die Klebeschicht kann auf einfache Weise hergestellt werden. Dabei werden entsprechende Kunststoffe in einem Extruder gemischt und aufgeschmolzen und können als dünner klebriger Kunststofffilm aufkalandriert werden.

Im Rahmen der Erfindung haben sich Mischungen aus Ethylenvinylacetatcopolymere mit jeweils unterschiedlichem Vinylacetatgehalt als besonders geeignet erwiesen. Derartige Produkte sind z. B. bei der Firma Lanxess unter der Typenbezeichnung Levamelt® 450 und Levamelt® 700 erhältlich. Hier haben sich Mischungsverhältnisse von Levamelt® 700 zu Levamelt® 450 beispielsweise von 3 : 1 als sehr geeignet erwiesen.

Besonders vorteilhaft sind Mischungen aus Ethylenvinylacetatcopolymeren, welche einen Vinylacetatgehalt von 40-90, vorzugsweise 45-70 Gew.-% aufweisen.

Die Printmedien gemäß der Erfindung lassen sich mit Dekorationen, Bildern usw. sowohl in schwarz-weiß als auch in allen möglichen Farben versehen. Sie sind auch sehr geeignet, zur Weitergabe von Informationen in gedruckter Form. Sehr geeignet sind sie auch zum Überkleben von Warnschildern, Verkehrsschildern usw.

Ein weiterer Gegenstand der Erfindung ist ein Verfahren zur Herstellung eines selbstklebenden Printmediums, das dadurch gekennzeichnet ist, dass man aus Polyesterstapelfasergarnen und Polyesterfilamentgarnen ein Gewebe herstellt, wobei das Schussgarn ein Stapelfasergarn und das Kettgarn ein Endlosfilamentgarn ist oder das Kettgarn ein Stapelfasergarn und das Schussgarn ein Endlosfilamentgarn ist, das Gewebe wäscht und trocknet, sodann mit einer wässrigen Flotte mit einem Hydrophobierungsmittel und einem Fungizid imprägniert und trocknet, sodann auf einer Seite eine transparente bzw. pigmentierte Beschichtung aufbringt und auf dieser transparenten bzw. pigmentierten Beschichtung eine bedruckbare Lackschicht aufbringt und auf der Seite des Gewebes, welche der Seite mit der transparenten bzw. pigmentierten Beschichtung gegenüber liegt, eine Klebeschicht aufbringt, welche aus einer Mischung von mindestens zwei thermoplastischen Kunststoffen bzw. polymeren Kunststoffen besteht und die Klebeschicht ggf. mit einer Schutzfolie überzieht.

Die Erfindung wird durch folgendes Beispiel näher erläutert:

### BEISPIEL

Aus einem Polyesterstapelfasergarn als Schussgarn und einem Polyesterendlosfilamentgarn in der Kette wird ein dicht gewebtes Gewebe hergestellt. Das Rohgewebe wird gewaschen und anschließend getrocknet.

Sodann wird das gewaschene getrocknete Gewebe mit einer wässrigen Dispersion imprägniert, welche ein Fluorkarbon und ein Fungizid enthält. Nach der Imprägnierung wird getrocknet.

Anschließend wird das imprägnierte und getrocknete Gewebe mit einer wässrigen Acrylatbeschichtung beschichtet, die ein Weißpigment enthält. Anschließend wird getrocknet.

Sodann wird auf der Seite, welche mit dem Acrylat beschichtet ist, eine bedruckbare Lackschicht aufgebracht.

Anschließend wird eine Mischung aus Levamelt® 450 und Levamelt® 700 mittels eines Extruders extrudiert und auf der Seite, welcher der Lackschicht gegenüber liegt, aufgebracht und mit Hilfe eines Vierwalzenkalanders zu einem dünnen Klebefilm kalandriert und auf der nicht lackierten Seite aufkaschiert.

Unmittelbar nach dem Aufkaschieren des Klebefilms wird eine einseitig silikonbeschichtete Schutzfolie auf die Klebeschicht aufgebracht.

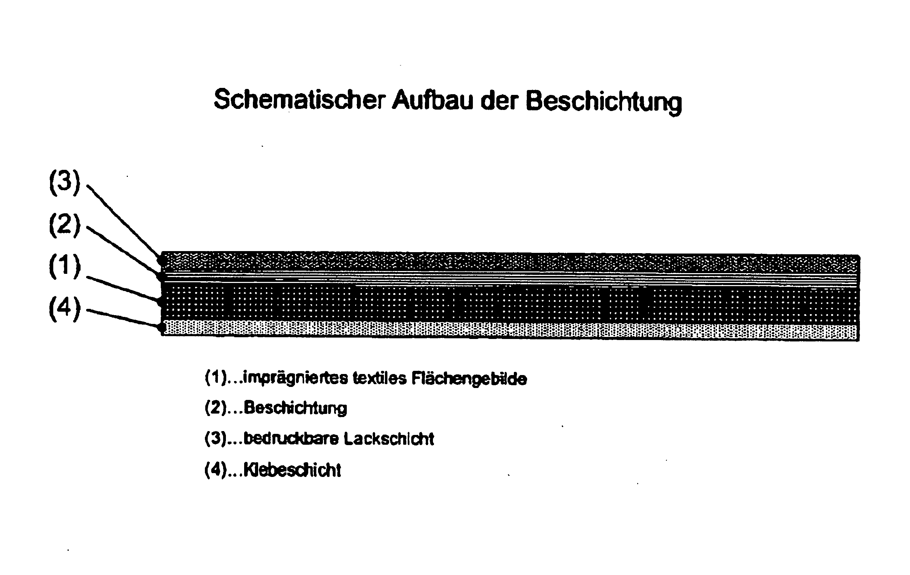

Die Figur stellt schematisch ein Printmedium gemäß der Erfindung dar. Dabei ist (1) ein imprägniertes Gewebe, welches auf der einen Seite eine pigmentierte Beschichtung (2) aufweist, auf der die bedruckbare Lackschicht (3) aufgebracht ist. Die Klebeschicht (4) ist auf der gegenüberliegenden Seite aufgebracht und ggf. mit einer Schutzfolie (5) nicht dargestellt überzogen.

## Patentansprüche

1. Selbstklebendes Printmedium, das umfasst ein mit einem Hydrophobierungsmittel und einem Fungizid imprägniertes textiles Flächengebilde (1), das eine einseitig aufgebrachte transparente bzw. pigmentierte Beschichtung (2) aufweist, auf der eine bedruckbare Lackschicht (3) aufgebracht ist, und das auf der anderen Seite, welche gegenüber der transparenten bzw. pigmentierten Beschichtung (2) liegt, eine Klebeschicht (4) aufweist, welche aus einer Mischung von mindestens zwei thermoplastischen bzw. polymeren Kunststoffen besteht.

2. Selbstklebendes Printmedium nach Anspruch 1, **dadurch gekennzeichnet, dass** der polymere Kunststoff ein Kautschuk oder ein Elastomer ist.

3. Printmedium nach Anspruch 1 oder 2, **dadurch gekennzeichnet, dass** das textile Flächengebilde ein Gewebe ist,

4. Printmedium nach Anspruch 3, **dadurch gekennzeichnet, dass** das Gewebe aus Polyestergarnen aufgebaut ist, wobei das Schussgarn ein Polyesterstapelfasergarn und das Kettgarn ein Polyesterfilamentgarn ist oder umgekehrt, wobei das Schussgarn ein Polyesterfilamentgarn und das Kettgarn ein Polyesterstapelfasergarn ist.

5. Selbstklebendes Printmedium nach mindestens einem der Ansprüche 1 bis 4, **dadurch gekennzeichnet, dass** die einseitige Beschichtung (2) eine Acrylatbeschichtung ist.

6. Printmedium nach mindestens einem der Ansprüche 1 bis 4, **dadurch gekennzeichnet, dass** die Klebeschicht (4) mindestens zwei Polymere umfasst, die Copolymere aus dem gleichen Monomer und Comonomer sind, jedoch mit unterschiedlichen Gewichtsanteilen der jeweiligen Monomere bzw. Comonomere.

7. Printmedium nach Anspruch 5, **dadurch gekennzeichnet, dass** die Copolymere Ethylen-Vinylacetatcopolymere sind.

8. Printmedium nach Anspruch 7, **dadurch gekennzeichnet, dass** der Vinylacetatgehalt des Copolymeren 40-90, vorzugsweise 45-70 Gewichtsprozent beträgt.

9. Printmedium nach mindestens einem der Ansprüche 1 bis 8, **dadurch gekennzeichnet, dass** das Mischungsverhältnis der thermoplastischen Kunststoffe bzw. polymeren Kunststoffe 25 : 75 bis 75 : 25 beträgt.

10. Selbstklebendes Printmedium nach mindestens einem der Ansprüche 1 bis 9, **dadurch gekennzeichnet, dass** auf der Klebeschicht eine Schutzfolie aufgebracht ist.

11. Printmedium nach Anspruch 10, **dadurch gekennzeichnet, dass** die Schutzfolie eine einseitig silikonisierte Schutzfolie ist.

12. Verfahren zur Herstellung eines selbstklebenden Printmediums, **dadurch gekennzeichnet, dass** man aus Polyesterstapelfasergamen und Polyesterfilamentgarnen ein Gewebe herstellt, wobei das Schussgarn ein Stapelfasergarn und das Kettgarn ein Endlosfilamentgarn ist oder das Kettgarn ein Stapelfasergarn und das Schussgarn ein Endlosfilamentgarn ist, das Gewebe wäscht und trocknet, sodann mit einer wässrigen Flotte mit einem Hydrophobierungsmittel und einem Fungizid imprägniert und trocknet, sodann auf einer Seite eine transparente bzw. pigmentierte Beschichtung aufbringt und auf dieser transparenten Beschichtung eine bedruckbare Lackschicht aufbringt und auf der Seite des Gewebes, welche der Seite mit der transparenten bzw. pigmentierten Beschichtung gegenüber liegt, eine Klebeschicht aufbringt, welche aus einer Mischung von mindestens zwei thermoplastischen Kunststoffen bzw. polymeren Kunststoffen besteht und die Klebeschicht ggf. mit einer Schutzfolie überzieht.

## Claims

1. Self-adhesive print substrate which comprises a textile fabric (1), impregnated with a hydrophobing agent and a fungicide, which has a transparent or pigmented coating (2) applied to one of its sides, to which coating (2) a layer of lacquer (3) able to be printed on is applied, and which has, on the other side opposite from the transparent or pigmented coating (2), an adhesive layer (4) which comprises a mixture of at least two thermoplastic or polymeric plastics materials.

2. Self-adhesive print substrate according to claim 1, **characterised in that** the polymeric plastics material is a rubber or an elastomer.

3. Print substrate according to claim 1 or 2, **characterised in that** the textile fabric is a woven fabric.

4. Print substrate according to claim 3, **characterised in that** the woven fabric is constructed from yarns of polyester, the weft yarn being a yarn of polyester staple fibres and the warp yarn being a yarn of polyester filaments or, the opposite way round, the weft yarn being a yarn of polyester filaments and the warp yarn being a yarn of polyester staple fibres.

5. Self-adhesive print substrate according to at least one of claims 1 to 4, **characterised in that** the coating (2) on one side is an acrylate coating.

6. Print substrate according to at least one of claims 1 to 4, **characterised in that** the adhesive layer (4) comprises at least two polymers which are co-polymers of the same monomer and co-monomer, but with different proportions by weight of whichever are the monomers and co-monomers.

7. Print substrate according to claim 5, **characterised in that** the co-polymers are ethylene vinyl acetate co-polymers.

8. Print substrate according to claim 7, **characterised in that** the vinyl acetate content of the co-polymer is 40-90% by weight and preferably 45-70% by weight.

9. Print substrate according to at least one of claims 1 to 8, **characterised in that** the ratio in which the thermoplastic plastics materials or polymeric plastics materials are mixed is 25:75 to 75:25

10. Self-adhesive print substrate according to at least one of claims 1 to 9, **characterised in that** a protective film or foil is applied to the adhesive layer.

11. Print substrate according to claim 11, **characterised in that** the protective film or foil is a protective film or foil which is siliconised on one side.

12. Method of producing a self-adhesive print substrate, **characterised in that** a woven fabric is produced from yarns of polyester staple fibres and yarns of polyester filaments, the weft yarn being a yarn of staple fibres and the warp yarn being a yarn of continuous filaments or the warp yarn being a yarn of staple fibres and the weft yarn being a yarn of continuous filaments, the woven fabric is washed and dried, is then impregnated in an aqueous bath containing a hydrophobing agent and a fungicide, then has a transparent or pigmented coating applied to it on one side and has a layer of lacquer able to be printed on applied to the said transparent coating, and an adhesive layer which comprises a mixture of at least two thermoplastic plastics materials or polymeric plastics materials is applied to the opposite side of the woven fabric from the transparent or pigmented coating, and the layer of adhesive is covered, if required, with a protective film or foil.

## Revendications

1. Support d'impression autocollant qui comprend un produit plat textile (1) imprégné avec un agent rendant hydrophobe et avec un fongicide, qui présente une enduction transparente respectivement pigmentée (2) appliquée sur un côté, sur laquelle est appliquée une couche de laque imprimable (3), et qui présente, sur l'autre côté qui est opposé à l'enduction transparente respectivement pigmentée (2), une couche adhésive (4) qui est constituée d'un mélange d'au moins deux matières synthétiques thermoplastiques respectivement polymères.

2. Support d'impression autocollant selon la revendication 1, **caractérisé en ce que** la matière synthétique polymère est un caoutchouc ou un élastomère.

3. Support d'impression autocollant selon la revendication 1 ou 2, **caractérisé en ce que** le produit plat textile est un tissu.

4. Support d'impression autocollant selon la revendication 3, **caractérisé en ce que** le tissu se compose de fils de polyester, le fil de trame représentant un fil de fibres discontinues en polyester et le fil de chaîne représentant un fil à filaments en polyester ou inversement le fil de trame représentant un fil à filaments en polyester et le fil de chaîne représentant un fil de fibres discontinues en polyester.

5. Support d'impression autocollant selon au moins une des revendications 1 à 4, **caractérisé en ce**
**que** l'enduction unilatérale (2) est une enduction à base d'acrylate.

6. Support d'impression autocollant selon au moins une des revendications 1 à 4, **caractérisé en ce que** la couche adhésive (4) comprend au moins deux polymères qui représentent des copolymères constitués du même monomère et du même comonomère, mais avec des proportions différentes des monomères ou des comonomères respectifs.

7. Support d'impression autocollant selon la revendication 5, **caractérisé en ce que** les copolymères sont des copolymères d'éthylèneacétate de vinyle.

8. Support d'impression autocollant selon la revendication 7, **caractérisé en ce que** la teneur du copolymère en acétate de vinyle s'élève de 40 à 90 % en poids, de préférence de 45 à 70 % en poids.

9. Support d'impression autocollant selon au moins une des revendications 1 à 8, **caractérisé en ce que** la proportion des matières synthétiques thermoplastiques respectivement des matières polymères s'élève de 25 : 75 à 75 : 25.

10. Support d'impression autocollant selon au moins une des revendications 1 à 9, **caractérisé en ce qu'**on applique un film de protection sur la couche adhésive.

11. Support d'impression autocollant selon la revendication 10, **caractérisé en ce que** le film de
protection est un film de protection siliconisé sur un côté.

12. Procédé pour la fabrication d'un support d'impression autocollant, **caractérisé en ce qu'**on fabrique un tissu à partir de fils de fibres discontinues en polyester et de fils à filaments en polyester, le fil de trame représentant un fil de fibres discontinues et le fil de chaîne représentant un fil à filaments continus ou bien le fil de chaîne représentant un fil de fibres discontinues et le fil de trame représentant un fil à filaments continus, on lave le tissu et on le sèche, on l'imprègne ensuite dans un bain aqueux avec un agent rendant hydrophobe et avec un fongicide et on le sèche, on applique ensuite sur un côté une enduction transparente respectivement pigmentée et on applique sur cette enduction transparente une couche de laque imprimable et, sur le côté du tissu qui est opposé au côté présentant l'enduction transparente respectivement pigmentée, on applique une couche adhésive qui est constituée d'un mélange d'au moins deux matières synthétiques thermoplastiques respectivement d'au moins deux matières synthétiques polymères, et on recouvre la couche adhésive le cas échéant d'un film de protection.
